# EUROPEAN PATENT APPLICATION

(11) **EP 1 632 278 A1**
(43) Date of publication of application: **08.03.2006**
(21) Application number: 03715758.3
(22) Date of filing: 04.04.2003
(51) Int. Cl.: B01D 53/52, C02F 1/28, B09C 1/08, B01J 20/12

(54) **METHOD FOR CLARIFYING TOXIC GAS, CONTAMINATED SOIL OR CONTAMINATED WATER**

(71) Applicant: Yoshizawa, Kayoko, Utsunomiya-shi, Tochigi 320-0051 (JP)
(72) Inventor: Degawa Kayoko, Okinawa 907-0004 (JP); Yoshizawa,Michiyasu/679-13, Tochigi 320-0051 (JP); NAKAJIMA, Yasushi, Utsunomiya-shi, Tochigi 320-0062 (JP)
(74) Representative: Oser, Andreas
(86) International application number: PCT/JP2003/004322
(87) International publication number: WO 2004/089513

(57) **Zusammenfassung**

Ein Reinigungsmaterial, welches **dadurch gekennzeichnet ist**, dass es hergestellt ist, indem ein Ausgangsmaterial, welches natürliche Erde als eine Hauptkomponente umfasst, getrocknet wird und die getrocknete Erde bei 500°C bis 800°C gesintert wird, damit die Erde einen Wassergehalt von 10% oder weniger aufweist; ein Verfahren zum Reinigen eines toxischen Gases, einer verunreinigten Erde oder von verunreinigtem Wasser, welches das Inkontaktbringen des zu reinigenden Materials mit dem Reinigungsmaterial umfasst; sowie eine Vorrichtung zum Ausführen des Verfahrens. Das Reinigungsmaterial ist in der Lage, ein toxisches Gas, eine verunreinigte Erde, verunreinigtes Wasser oder dergleichen mit sehr hoher Effizienz zu reinigen, und es kann regeneriert und wiederholt wiederverwendet werden, und ist so herausragend ausgezeichnet vom Standpunkt der Erhaltung der natürlichen Umwelt, der Ressourcenschonung sowie auch der Ökonomie.

## Description

### Technischer Bereich

Die vorliegende Erfindung umfasst Verfahren, mit denen toxische Gase, wie z.B. aus der Erde austretendes Schwefelwasserstoffgas, unschädlich gemacht werden bzw. durch Schadstoffe verunreinigtes Erdreich oder Wasser in einem Rückhaltebecken oder einem agrarischen Bewässerungsteich gereinigt wird, sowie die Vorrichtung und die Materialien für diese Reinigungsverfahren.

### Technischer Hintergrund

In den letzten Jahren wird von möglichen Gefahren berichtet, die von Schwefelwasserstoffgas ausgehen, das aus Abfallbeseitigungsanlagen bzw. den Grundstücken aufgelassener Anlagen bzw. Deponien austritt. Dieses Gas entsteht, wenn Schwefel-Ionen in hoher Konzentration in Böden vorkommen, in denen Abfälle eingelagert wurden, und wenn Mikroorganismen unter Verwertung organischer Substanzen als Kohlenstoffquelle Sulfat zu Schwefelwasserstoff reduzieren.

Schwefelwasserstoffgas ist hoch toxisch. Wenn es sich im Boden ansammelt und durch die Deckschicht in die Luft entweicht, sind die Anrainer der Anlage oder die Nutzer von Altlasten-Grundstücken hochgradig gefährdet.

Bringt man Gase mit schädlichen oder übel riechenden Bestandteilen wie Schwefelwasserstoffgas mit einer Erde (z.B. aus der Natur entnommenem Erdreich) zusammen, so werden die schädlichen oder übel riechenden Bestandteile adsorbiert. So werden sie bekanntermaßen unschädlich gemacht, und ihr unangenehmer Geruch wird beseitigt. Die Patentschrift Nr. Toku Kai 2000-237531 beispielsweise offenbart Verfahren und Vorrichtungen, mit denen man die im Boden von Abfallbeseitigungsanlagen angesammelten toxischen Gase dem Boden entzieht und dann durch eine Anlage zur Geruchsbindung führt, die mit Erde gefüllt ist. So können übel riechende und schädliche Bestandteile wie Methylmercaptan oder Schwefelwasserstoff, die in toxischen Gasen enthalten sind, durch Adsorption und Zersetzung an der Erdfüllung beseitigt werden. Die Patentschrift Toku Kai Sho 58-61821 offenbart ein Verfahren, mit dem man Gasen ihren unangenehmen Geruch durch Andosole entzieht.

Es ist weiterhin bekannt, dass natürliche Erde nicht nur zum Unschädlichmachen von toxischen Gasen und zum Entzug unangenehmer Gasgerüche, sondern auch zur Behandlung verunreinigten Wassers verwendet wird. Die Patentschrift Toku Ko Hei 7-115022 offenbart z.B. ein Reinigungsverfahren für verunreinigtes Wasser, bei dem das Wasser mit einer Erde (Andosol, brauner Walderde, gelbbrauner Walderde, grauer Tieflanderde usw.) in Kontakt gebracht wird. Durch die Diffusion und Infiltration wird sowohl der Phosphor aus dem verunreinigten Wasser adsorbiert als auch der Stickstoff beseitigt.

Die in der genannten Literatur offenbarten Verfahren haben jedoch ihre Grenzen in der Effektivität der Adsorption und der Geruchsbindung. Herkömmlich wird beispielsweise die Naturerde in einen dicht verschlossenen Behälter von 25 Litern gefüllt. Leitet man dann ein toxisches Gas mit einer Schwefelwasserstoff-Konzentration von 200 ppm hindurch, so werden durch den Kontakt des Gases mit der Naturerde nicht alle Schadstoffe adsorbiert und beseitigt. Vielmehr enthält das aus diesem Behälter austretende Gas immer noch 50-80 ppm des Schadstoffes.

Außerdem lässt der Reinigungseffekt nach einer gewissen Zeit, sobald bereits eine bestimmte Menge an Schadstoffen adsorbiert worden ist, erheblich nach. Daher muss man die in den Behälter gefüllte Erde (die verbrauchte Erde) regelmäßig durch eine neue Füllung ersetzen. Das ist problematisch, weil die dafür geeigneten Erden begrenzte natürliche Ressourcen sind. Diese Verfahren sind also für den Dauereinsatz oder für große Anlagen untauglich, weil die kostbaren Bodenschätze sonst rasch erschöpft wären. Zudem müsste die verbrauchte und wieder gesammelte Erde aufwändig entsorgt werden, da sie Schadstoffe enthält.

Die vorliegende Erfindung umfasst Reinigungsmaterialien, Reinigungsverfahren, bei denen sie eingesetzt werden, sowie eine Vorrichtung zur Durchführung der Verfahren und vermeidet die oben genannten technischen Probleme der bisherigen Verfahren weitestgehend. Toxische Gase, verunreinigte Erde und verunreinigtes Wasser werden sehr effektiv gereinigt; die Verfahren sind umweltfreundlich, ressourcenschonend und äußerst wirtschaftlich, weil die benutzten Materialien wiederholt eingesetzt werden können.

### Offenbarung der Erfindung

Die Besonderheit der vorliegenden Erfindung "Verfahren zur Reinigung toxischer Gase, verunreinigter Erde sowie verunreinigten Wassers" ist folgende: Als Hauptausgangsmaterial kommt natürliche Erde zum Einsatz, aus der man das Reinigungsmaterial herstellt, indem man sie trocknet, bis ihr Wassergehalt unter 10 % liegt. Toxisches Gas, verunreinigte Erde oder verunreinigtes Wasser wird mit diesem Reinigungsmaterial in Kontakt gebracht, und die Schadstoffe werden daran adsorbiert.

Als Hauptausgangssubstanz für das Reinigungsmaterial dient natürliche Erde, deren Wassergehalt z.B. durch Trocknen in der Sonne oder durch Warmluft reduziert wird. Idealerweise wird der Wassergehalt des Ausgangsmaterials jedoch durch Sintern (insbesondere bei einer Temperatur von 500-800 °C) reguliert.

Die Besonderheit der "Vorrichtung zur Reinigung toxischer Gase" der vorliegenden Erfindung besteht darin, dass das zu reinigende toxische Gas in zwei Behandlungsbecken (erstes und zweites Behandlungsbecken) eingeleitet wird, die mit dem Reinigungsmaterial gefüllt sind. Das toxische Gas wird in diesen Behandlungsbecken mit dem Reinigungsmaterial in Kontakt gebracht, und die Schadstoffe werden daran adsorbiert. Diese Vorrichtung umfasst folgende Teile: eine Komponente (z.B. ein Rohr zur Wasserbeseitigung), mit der dem toxischen Gas Wasser entzogen wird, bevor das toxische Gas in die Behandlungsbecken gelangt; eine Komponente (z.B. ein Drainagerohr) unterhalb der oben genannten Becken, mit der Wasser aus dem Becken abgeleitet wird; ein Reinigungsmaterial, das aus natürlicher Erde gewonnen wird, deren Wassergehalt durch Trocknen unter 10 % gesenkt wurde.

Bei dieser Vorrichtung kann als Hauptausgangssubstanz für das Reinigungsmaterial natürliche Erde dienen, deren Wassergehalt z.B. durch Trocknen in der Sonne oder durch Warmluft reduziert wird. Idealerweise wird der Wassergehalt des Ausgangsmaterials jedoch durch Sintern (insbesondere bei einer Temperatur von 500-800 °C) reguliert.

Das "Reinigungsmittel" der vorliegenden Erfindung hat folgende Besonderheit: Die Korngröße der natürlichen Erde wird durch Sieben (insbesondere durch ein Sieb mit einer Maschenweite von unter 2 mm) homogenisiert; ihr Wassergehalt wird durch Trocknen unter 10 % eingestellt.

Der Wassergehalt des Ausgangsmaterials kann z.B. durch Trocknen in der Sonne oder durch Warmluft reduziert werden. Idealerweise wird er jedoch durch Sintern (insbesondere bei einer Temperatur von 500-800 °C) reguliert.

### Kurzlegenden zu den Figuren

Fig. 1 zeigt den Aufbau der Reinigungsvorrichtung 1, die im "Verfahren zur Reinigung toxischer Gase" der vorliegenden Erfindung verwendet wird.
Fig. 2 und 3 zeigen weitere Aufbaubeispiele des ersten Behandlungsbeckens 3 (oder des zweiten Behandlungsbeckens 4), und zwar als Schrägbilder, bei denen jeweils ein Teil der Ober- und Vorderseite ausgespart wurde.
Fig. 4 ist ein Diagramm der Innentemperatur des Ofens, in dem das Reinigungsmaterial gemäß dem praktischen Beispiel gesintert wird.
Fig. 5 ist eine Tabelle mit den Bestandteilen der Proben 1-4 des Reinigungsmaterials, die in den praktischen Beispielen verwendet werden.
Fig. 6 ist eine schematische Darstellung der Vorrichtung 31 der vorliegenden Erfindung, die zur Reinigung verunreinigten Wassers dient.

### Bevorzugte Ausführungsformen der Erfindung

Im Folgenden werden bevorzugte Ausführungsformen des "Verfahrens zur Reinigung toxischer Gase" der vorliegenden Erfindung erläutert. Schwefelwasserstoffgas dient dabei als ein Beispiel für toxische Gase. Es wird erklärt, wie man mit dem Verfahren ein Gas von dieser Verbindung reinigt.

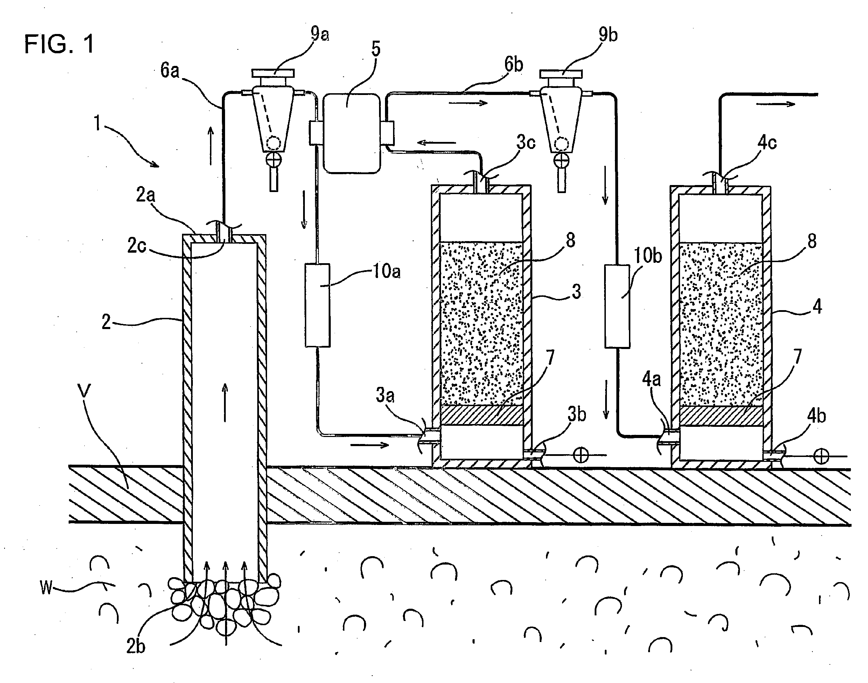

Das vorliegende Reinigungsverfahren eignet sich sehr gut für Fälle, bei denen z.B. das in der Erde einer ehemaligen Abfallbeseitigungsanlage oder einer Abfalldeponie angesammelte Schwefelwasserstoffgas in die Luft entweicht. An einer solchen Gasaustrittsstelle wird eine Reinigungsvorrichtung 1 angebracht, wie die Fig. 1 zeigt. In diese Vorrichtung wird das Reinigungsmaterial 8 eingefüllt, das vorher nach dem entsprechenden Verfahren aus natürlicher Erde hergestellt wurde. Die Reinigungsvorrichtung 1 verfügt - wie abgebildet - im Allgemeinen über ein Rohr zur Gasaufnahme 2, ein erstes Behandlungsbecken 3, ein zweites Behandlungsbecken 4, eine Pumpe 5 sowie eine Gasleitung 6 (6a, 6b).

Der größte Teil des Gasaufnahmerohrs 2 wird in der Erde eingegraben. Das untere Ende 2b reicht durch die Deckschicht V der Deponie hindurch und erreicht die Abfallschicht W. Sein oberes Ende 2a ragt hingegen aus der Erde heraus. Das untere Ende 2b des Gasaufnahmerohrs 2 ist offen, so dass das Innere des Rohrs 2 mit der Abfallschicht W in Verbindung steht. Am oberen Ende 2a ist ein Gasauslass 2c angebracht.

Das erste und das zweite Behandlungsbecken 3 und 4 sind beide zylinderförmig mit einem Innendurchmesser von 20 cm. Am unteren Ende befindet sich jeweils ein Gaseinlass 3a und 4a, am oberen Ende jeweils ein Gasauslass 3c und 4c. Etwas unterhalb der Einlasse 3a und 4a sind die Drainagerohre 3a und 4a angebracht, durch die Wasser aus den Behandlungsbecken abgelassen wird. Etwas oberhalb der Gaseinlasse befinden sich die Filter 7 und 7, die das Wasser aus dem Gas adsorbieren. Darüber sind jeweils 10 Liter (Füllhöhe ca. 32 cm) Reinigungsmaterial 8 geschichtet.

Beide Behandlungsbecken sind wasserdicht konstruiert, weil die Reinigungsleistung im Winter möglicherweise sinken würde, wenn das Reinigungsmaterial mit eindringendem Wasser getränkt würde, das gefrieren könnte.

Das Gasaufnahmerohr 2 und das erste Behandlungsbecken 3 sind über eine Gasleitung 6a verbunden. Das erste Behandlungsbecken 3 und das zweite Behandlungsbecken 4 sind ebenfalls über eine Gasleitung 6b verbunden. Konkreter: Ein Ende der Gasleitung 6a ist mit dem Gasauslass 2c des Gasaufnahmerohrs 2 verbunden und das andere Ende mit dem Gaseinlass 3a des ersten Behandlungsbeckens 3. Ebenso ist ein Ende der Gasleitung 6b mit dem Gasauslass 3c des ersten Behandlungsbeckens 3 und das andere Ende mit dem Gaseinlass 4a des zweiten Behandlungsbeckens 4 verbunden. Zwischen den beiden Gasleitungen 6a und 6b befindet sich eine Pumpe 5, außerdem ist jeweils ein Wasserbeseitigungsrohr 9a und 9b sowie ein Gerät zur Fließmengenmessung 10a und 10b integriert.

Das Reinigungsmittel 8 im ersten Behandlungsbecken 3 und im zweiten Behandlungsbecken 4 wird folgendermaßen hergestellt: Die Korngröße der aus der Natur entnommenen Erde wird durch ein Sieb mit einer Maschenweite von unter 2 mm vereinheitlicht; die gesiebte Erde wird unter entsprechenden Bedingungen (z. B. bei einer Temperatur von 700 °C mindestens 5 Stunden) gesintert.

Im Folgenden soll die Funktion der Reinigungsvorrichtung 1 erklärt werden, die in Abb. 1 dargestellt ist: Wird die Pumpe 5 in Gang gesetzt, so wird die Luft im Gasaufnahmerohr 2 in die Gasleitung 6a gesaugt und in das erste Behandlungsbecken 3 geleitet. Wie oben beschrieben, steht das Innere des Gasaufnahmerohrs 2 über sein offenes Ende 2b mit der Abfallschicht W in Verbindung. Dadurch strömt das in der Abfallschicht W entstandene Schwefelwasserstoffgas in das Gasaufnahmerohr 2.

Dieses Schwefelwasserstoffgas, das in das Gasaufnahmerohr 2 gelangt ist, wird durch die Pumpe 5 angesaugt und durch die Gasleitung 6a in das erste Behandlungsbecken 3 eingeleitet. Das durch den Gaseinlass 3a in das erste Behandlungsbecken 3 gelangte Schwefelwasserstoffgas kommt oberhalb des Filters 7 mit dem Reinigungsmaterial 8 in Kontakt. Hier werden Schadstoffe und übel riechende Bestandteile am Reinigungsmaterial 8 adsorbiert und das Gas gereinigt.

Das im ersten Behandlungsbecken 3 gereinigte Gas (die vorgereinigte Luft) wird wieder durch die Pumpe 5 angesaugt, strömt durch den Gasauslass 3c aus und wird über die Gasleitung 6b in das zweite Behandlungsbecken 4 geleitet. Das zweite Behandlungsbecken 4 ist ebenso konstruiert wie das erste Behandlungsbecken 3. Die vorgereinigte Luft, die das zweite Behandlungsbecken 4 erreicht, wird in gleicher Weise wie im ersten Behandlungsbecken 3 nochmals gereinigt. Anschließend wird das im zweiten Behandlungsbecken 4 weiter gereinigte Gas (die fertig gereinigte Luft) durch den Gasauslass 4c aus der Vorrichtung (in die Atmosphäre) abgeführt.

Enthält das zu reinigende Schwefelwasserstoffgas viel Wasser, so würde dieses im ersten Behandlungsbecken 3 und im zweiten Behandlungsbecken 4 am Reinigungsmittel 8 adsorbiert. Verbliebe dieses adsorbierte Wasser länger im Reinigungsmittel 8, könnte es aus folgenden Gründen zu einer verringerten Schadstoffadsorption kommen, was die Reinigungsleistung der Vorrichtung 1 extrem beeinträchtigen würde: Das Schwefelwasserstoffgas (oder die vorgereinigte Luft) würde weniger gleichmäßig durch das erste Behandlungsbecken 3 (bzw. das zweite Becken 4) strömen; die gleichmäßige Abfuhr aus dem System würde dadurch beeinträchtigt; das Wasser könnte die Poren in und zwischen den Erdkörnchen verschließen, aus denen das Reinigungsmaterial 8 besteht.

Aus diesen Gründen ist die Reinigungsvorrichtung 1 in der vorliegenden Anwendungsform so konzipiert, dass das Wasser möglichst vor dem Kontakt mit dem Reinigungsmaterial 8 aus dem Schwefelwasserstoffgas entfernt wird. So ist gewährleistet, dass das Gas gleichmäßig strömt, die Durchflussmenge nicht sinkt sowie Schadstoffe langfristig effektiv adsorbiert werden.

Nun soll der Aufbau der Vorrichtung konkreter beschrieben werden: Das Reinigungsmaterial 8 ist über einen Wasser adsorbierenden Filter 7 geschichtet. So wird das Wasser im Schwefelwasserstoffgas, noch bevor es mit dem Reinigungsmaterial 8 in Kontakt kommt, am Filter 7 adsorbiert; die Wassertropfen fließen hinab in die unterhalb des Filters angebrachten Drainagerohre 3b und 4b und werden zügig aus der Vorrichtung abgeleitet.

An den Gasleitungen 6a und 6b sind außerdem Wasserbeseitigungsrohre 9a und 9b angebracht, durch die möglichst viel Wasser aus dem in das erste Behandlungsbecken 3 strömenden Schwefelwasserstoffgas und aus der in das zweite Behandlungsbecken 4 strömenden vorgereinigten Luft abgeschieden werden kann. Konkreter zum Aufbau dieser Wasserabfuhrvorrichtungen 9a und 9b: Sie umfassen im Allgemeinen ein trichterförmiges (oder zylinderförmiges) Hauptteil und ein darunter angebrachtes Ventil; das Wasser im durchströmenden Gas schlägt sich an der inneren Oberfläche dieses Hauptteils als Kondenswasser nieder; die Wassertropfen werden gesammelt und über das Ventil aus dem System abgeführt.

Die Reinigungsvorrichtung 1, die bei der Durchführung der vorliegenden Erfindung eingesetzt wird, reinigt trotz ihrer einfachen Konstruktion das Schwefelwasserstoffgas sehr effektiv. Da das Reinigungsmaterial 8 durch eine Regenerierungsbehandlung wiederholt verwendbar ist, lässt sich Schwefelwasserstoff damit dauerhaft aus einem Gas entfernen.

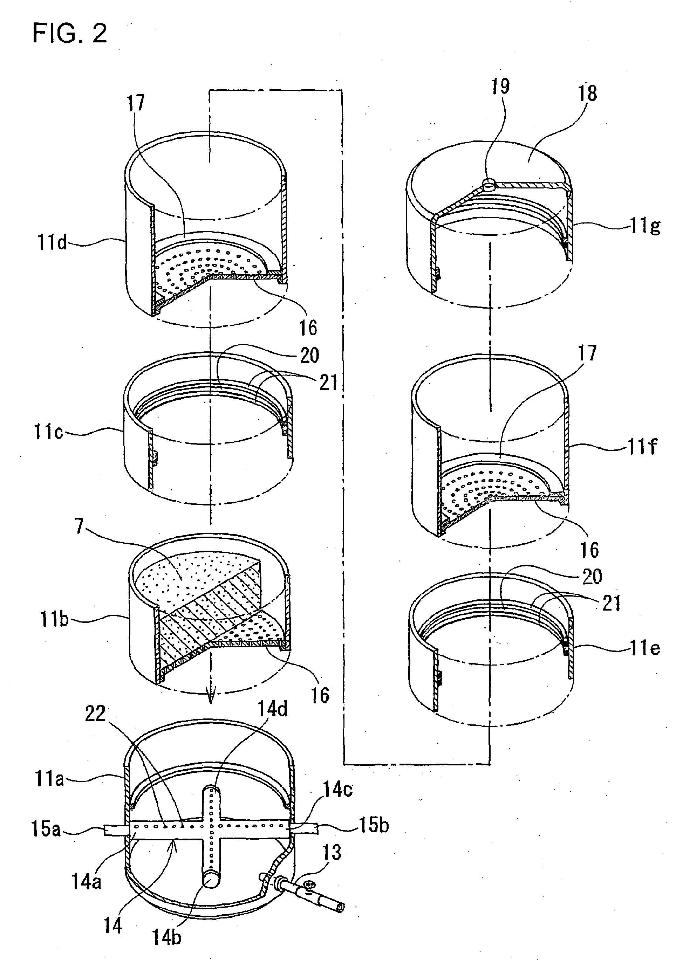

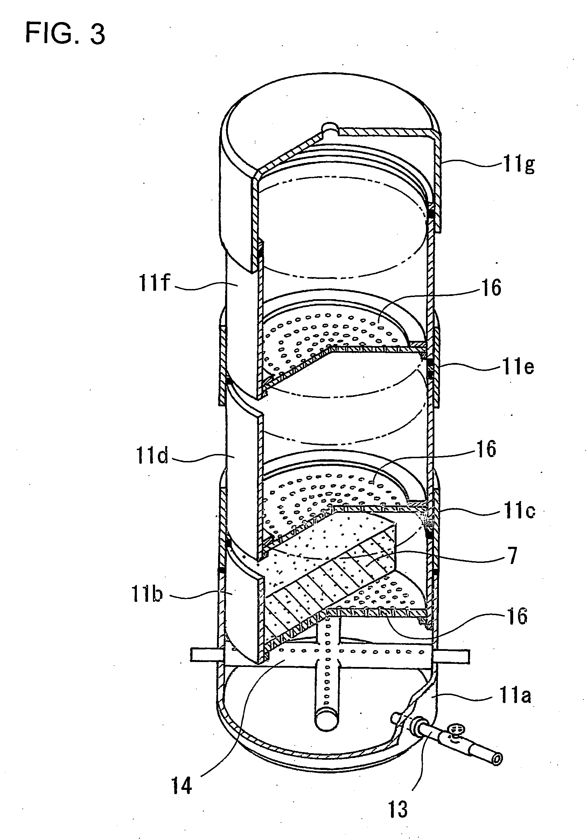

Die beiden Behandlungsbecken (das erste Behandlungsbecken 3 und das zweite Behandlungsbecken 4), die in der Reinigungsvorrichtung 1 verwendet werden, müssen nicht wie in Fig. 1 aufgebaut sein. Man kann z. B. auch die in den Figuren 2 und 3 gezeigten Behandlungsbecken einsetzen.

Dieser Punkt soll noch ausführlicher erläutert werden: Die in den Figuren 2 und 3 gezeigten Behandlungsbecken umfassen sieben zylinderförmige Teile (11a - 11g). Das zuunterst platzierte zylinderförmige Teil 11a verfügt über einen Boden 12, in dessen Nähe ein Drainagerohr 13 angebracht ist.

Etwas oberhalb dieses Drainagerohrs 13 befindet sich ein kreuzförmiges Rohr 14. Zwei gegenüberliegende Enden 14a und 14c der vier Enden (14a - 14d) des kreuzförmigen Rohrs 14 sind mit zwei Gaseinlassen (15a, 15b) verbunden, die wiederum mit einer Gasleitung in Verbindung stehen, wogegen die anderen beiden Enden, 14b und 14d, verschlossen sind. Wie die Abbildungen zeigen, ist die obere Seite des kreuzförmigen Rohrs 14 mit zahlreichen kleinen Löchern 22 versehen.

Die beiden Gaseinlasse 15a und 15b entsprechen dem Gaseinlass 3a des ersten Behandlungsbeckens 3 in der Fig. 1. Folglich werden die Gaseinlasse 15a und 15b der Figuren 2 und 3 nach einer Verzweigung mit einer Gasleitung verbunden, die der Leitung 6a in Fig. 1 entspricht. So strömt das Gas, das über das Gasaufnahmerohr 2 und die Gasleitung 6a geleitet wurde, durch die Gaseinlasse 15a und 15b in das kreuzförmige Rohr 14 hinein und wird durch die vielen kleinen Löcher 22 gleichmäßig im Innenraum des Behandlungsbeckens verteilt.

Das zylinderförmige Teil 11b, das zweite von unten, ist mit einer gelöcherten Bodenplatte 16 versehen, auf der sich der Filter 7 befindet, der das Wasser aus dem Gas adsorbiert.

Die zylinderförmigen Bauteile 11c, das dritte von unten, und 11e, das dritte von oben, dienen als Verbindungsstücke zwischen den darüber bzw. darunter liegenden Teilen. Sie verfügen deshalb jeweils über einen Flansch 20 in der unteren Innenwand und Dichtungen 21, 21 ober- und unterhalb jedes Flanschs.

Die beiden zylinderförmigen Teile 11d und 11f, die auf die Verbindungsstücke 11c und 11e aufgesetzt werden, fungieren als Kartuschen, die das Reinigungsmaterial enthalten. Sie sind mit einer gelöcherten Bodenplatte 16 versehen, auf der sich jeweils eine Platte 17, 17 befindet, die den Gasfluss reguliert. Vor der Anwendung steckt man diese Module, in denen das Reinigungsmittel (über die gelöcherten Bodenplatte 16) geschichtet ist, auf die zylinderförmigen Verbindungsst-ücke 11c und 11e.

Sinkt die Reinigungsleistung, so sollte das verbrauchte Material durch neues (oder durch solches, das durch eine Regenerierungsbehandlung sein Adsorptionsvermögen wiedergewonnen hat) ersetzt werden; dazu verfährt man folgendermaßen: Man legt in der Nähe der Reinigungsvorrichtung zwei zylinderförmige Kartuschen bereit, die mit frischem oder regeneriertem Material gefüllt sind. Diese werden gegen die Kartuschen 11d und 11f ausgetauscht, in denen sich das verbrauchte Material mit der reduzierten Reinigungsleistung befindet. Die ausgebauten Module 11d und 11f mit dem verbrauchten Reinigungsmaterial werden so, wie sie sind, zu einer Regenerierungsanlage befördert und dort behandelt. Durch den modularen Aufbau wird der Austausch sehr einfach. Das entlastet nicht nur den Arbeiter, sondern verkürzt auch die Austauschzeit. So muss die Reinigungsvorrichtung 1 nur für kurze Zeit stillgelegt werden.

Das zuoberst platzierte zylinderförmige Teil 11g schließt das Reinigungsbecken ab. Sein Deckel 18 hat in der Mitte einen Auslass 19 für das Abgas bzw. die gereinigte Luft.

Diese zylinderförmigen Teile 11a - 11g lassen sich stabil zusammensetzen, wie Abb. 3 zeigt, weil die übereinander liegenden Teile aufeinander abgestimmt sind. Konkreter: Der untere Rand des zylinderförmigen Teils 11b, des zweiten von unten, rastet innen in das darunter liegende Teil 11a ein, und sein oberer Rand rastet in das darüber liegende Teil 11c ein. Die unteren Ränder der zylinderförmigen Teile 11d und 11f werden in die jeweils darunter liegenden Teile 11c und 11e eingepasst, so wie ihre obere Ränder in die jeweils darüber liegenden Teile 11e und 11g gesteckt werden. Zudem ist eine - hier nicht abgebildete - Halterung so an der Außenseite aller zylinderförmigen Teile 11a - 11g angebracht, dass sie die Teile mit entsprechendem Druck fest verbindet. Dadurch wird die Leistung der Dichtung 21 zusätzlich erhöht und außerdem das Umfallen, beispielsweise bei einem starken Wind, praktisch verhindert.

Die beiden zylinderförmigen Teile 11d und 11f fungieren, wie oben erklärt, als Kartuschen und sind normalerweise mit Reinigungsmaterial gefüllt. Sie müssen jedoch nicht unbedingt Reinigungsmaterial enthalten. Schichtet man in eines der Teile das Reinigungsmaterial der vorliegenden Erfindung, so kann man das andere Teil mit einem anderen Material füllen, z. B. einem Granulat oder Pulver aus Aktivkohle oder einem Geruchsbinder.

Die Reinigungseinrichtung 1 der vorliegenden Erfindung kann nicht nur zur Reinigung aus dem Erdreich austretender toxischer Gase, sondern auch zur Reinigung von Gasen aus chemischen Fabrikanlagen eingesetzt werden, die für Menschen schädliche Substanzen enthalten. Außer Schwefelwasserstoffgas können auch andere toxische oder übel riechende Gase damit behandelt werden.

Das Reinigungsmaterial 8, das im ersten 3 und zweiten Behandlungsbecken 4 dieser Reinigungseinrichtung 1 enthalten ist, kann auch zur Reinigung verunreinigten Erdreichs eingesetzt werden. Man streut beispielsweise das Reinigungsmaterial auf die verunreinigte Erde, oder man gräbt die verunreinigte Erde aus und füllt dann das Loch abwechselnd mit Schichten aus Reinigungsmaterial 8 und verunreinigter Erde. So werden Schadstoffe und übel riechende Substanzen aus dem verunreinigten Erdreich erfolgreich adsorbiert, und die Erde wird gereinigt.

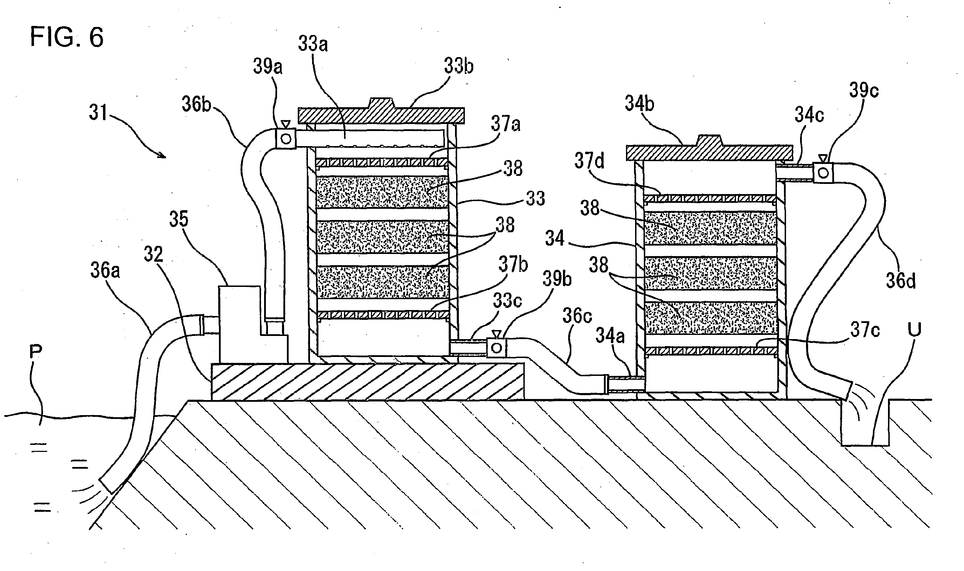

Im Folgenden soll die ideale Einsatzform der "Vorrichtung zur Reinigung verunreinigten Wassers" der vorliegenden Erfindung erklärt werden. Fig. 6 zeigt den Aufbau dieser Vorrichtung. Die Vorrichtung 31 wird, wie die Abbildung zeigt, an einem Rückhaltebecken, agrarischen Bewässerungsteich, See, Teich oder Fluss angebracht. Bei ihrem Einsatz wird verunreinigtes Wasser P abgepumpt, gereinigt und anschließend z. B. in einen Abfluss U geleitet.

Diese Reinigungsvorrichtung 31 umfasst im Wesentlichen folgende Komponenten: ein erstes Behandlungsbecken 33, ein zweites Behandlungsbecken 34, eine Pumpe 35, ein Schlauch zur Wasserentnahme 36a, Wasserleitungen 36b, 36c sowie ein Wasserablass-Schlauch 36d.

Das erste Reinigungsbecken 33 und die Pumpe 35 stehen auf einem Podest 32 und somit etwas höher als das zweite Reinigungsbecken 34.

Das erste Reinigungsbecken 33 verfügt über ein Wasserzuflussrohr 33a oben und einen Wasserauslass 33c unten. Das zweite Reinigungsbecken 34 verfügt über einen Wasserzufluss 34a unten und einen Wasserauslass 34c oben. In den Behandlungsbecken 33 und 34 befindet sich das Reinigungsmaterial 38 (dasselbe wie das Material 8 in der Reinigungsvorrichtung 1, Fig. 1), jeweils in drei Schichten. Ober- und unterhalb jeder Schicht ist jeweils eine Lochplatte 37 (37a - 37d) angebracht. Die beiden Behandlungsbecken 33 und 34 sind außerdem jeweils mit einem Deckel 33b, 34b versehen, so dass kein Regenwasser eindringen kann.

Im Folgenden soll die Funktionsweise der Reinigungsvorrichtung 31 erläutert werden: Wird die Pumpe 35 in Gang gesetzt, so wird das zu reinigende Wasser P durch einen Wasserentnahmeschlauch 36a angesaugt und über die Wasserleitung 36b zum Wasserzuflussrohr 33a des ersten Behandlungsbeckens 33 geleitet.

Die Fließmenge des verunreinigten Wassers P, das dem Wasserzuflussrohr 33a zugeleitet wird, wird durch ein Ventil 39a entsprechend reguliert, das zwischen der Wasserleitung 36b und dem Zuflussrohr 33a liegt.

Wie abgebildet ist das Wasserzuflussrohr 33a mit vielen kleinen Löchern versehen, durch die das verunreinigte Wasser P in den Innenraum des ersten Behandlungsbecken 33 gesprüht wird. Das aus dem Rohr austretende verunreinigte Wasser P dringt durch die Lochplatte 37a und die Reinigungsmaterialschichten 38. Hier werden Schadstoffe oder Verunreinigung im verunreinigten Wasser P am Reinigungsmaterial 38 adsorbiert, die Flüssigkeit wird gereinigt (vorgereinigtes Wasser). Dieses vorgereinigte Wasser strömt durch die Lochplatte 37b und den Wasserauslass 33c aus dem ersten Becken und gelangt über die Wasserleitung 36c in das zweite Behandlungsbecken 34.

Die Fließmenge des vorgereinigten Wassers, das aus dem Wasserauslass 33c abgeleitet wird, wird durch ein Ventil 39b entsprechend reguliert, das zwischen der Wasserleitung 36c und dem Wasserauslass 33c liegt.

Das vorgereinigte Wasser gelangt durch den Wasserzufluss 34a den Innenraum des zweiten Behandlungsbeckens 34. Anschließend wird es durch das Druckgefälle durch die Lochplatte 37c und die Schichten des Reinigungsmaterials 38 gepresst. Enthält das vorgereinigte Wasser noch Schadstoffe oder Verunreinigungen, so werden diese hier am Reinigungsmaterial 38 adsorbiert. Somit wird das vorgereinigte Wasser erneut gereinigt (fertig gereinigtes Wasser). Das zweimal gereinigte Wasser fließt anschließend über die Lochplatte 37d durch den Wasserablass 34c und wird über den Wasserablass-Schlauch 36d z. B. in einen Abfluss U geleitet.

Die Fließmenge des fertig gereinigten Wassers, das aus dem Wasserauslass 34c abgeleitet wird, wird durch ein Ventil 39c entsprechend reguliert, das zwischen der Wasserleitung 36d und dem Wasserauslass 34c liegt.

Die Reinigungsvorrichtung 31, die bei der Durchführung der vorliegenden Erfindung eingesetzt wird, reinigt trotz ihrer einfachen Konstruktion das verunreinigte Wasser sehr effektiv. Da das Reinigungsmaterial 38 durch eine Regenerierungsbehandlung wiederholt verwendbar ist, lässt sich das verunreinigte Wasser damit dauerhaft aus einem Gas entfernen.

Das hier verwendete Reinigungsmaterial 38 kann nicht nur für eine Reinigungsvorrichtung 31, wie in Fig. 6 gezeigt, sondern auch für andere Verfahren und Anlagen angewendet werden. Zum Beispiel kann das Reinigungsmaterial 38 in einen wasserdurchlässigen Behälter (Behälter aus Plastik mit feinen Löchern oder Beutel aus Stoff oder Gewebe) gefüllt werden. Wird dieser in ein verunreinigtes Rückhaltebecken oder einen belasteten agrarischen Bewässerungsteich eingetaucht, so werden die Schadstoffe aus dem verunreinigten Wasser am Reinigungsmaterial adsorbiert, und das Gewässer kann ohne großen Aufwand gereinigt werden.

Im Folgenden werden praktische Beispiele für die vorliegende Erfindung geschildert. Hierfür wurden der Natur drei Arten von Erde entnommen (Andosol, rote und braune Erde) und als Proben 1-3 gekennzeichnet. Probe 4 wurde aus je 50 % Andosol und roter Erde zusammengemischt.
Probe 1: Andosol (100 %)
Probe 2: rote Erde (100 %)
Probe 3: braune Erde (100 %)
Probe 4: Andosol (50 %), rote Erde (50 %)

Aus diesen Proben 1-4 als Ausgangsmaterialien stellte man die Reinigungsmaterialien folgendermaßen her: Die Erden der Proben 1-4 wurden jeweils natürlich getrocknet und durch ein Sieb mit einer Maschenweite von 2 mm gesiebt, um ihre Korngröße zu homogenisieren (Körnerregulierung). Durch diese Behandlung wird die Erde größtenteils gleichmäßig pulverisiert, worunter sich auch gekörnte Teile befinden. Alle haben einen Durchmesser von unter 2 mm.

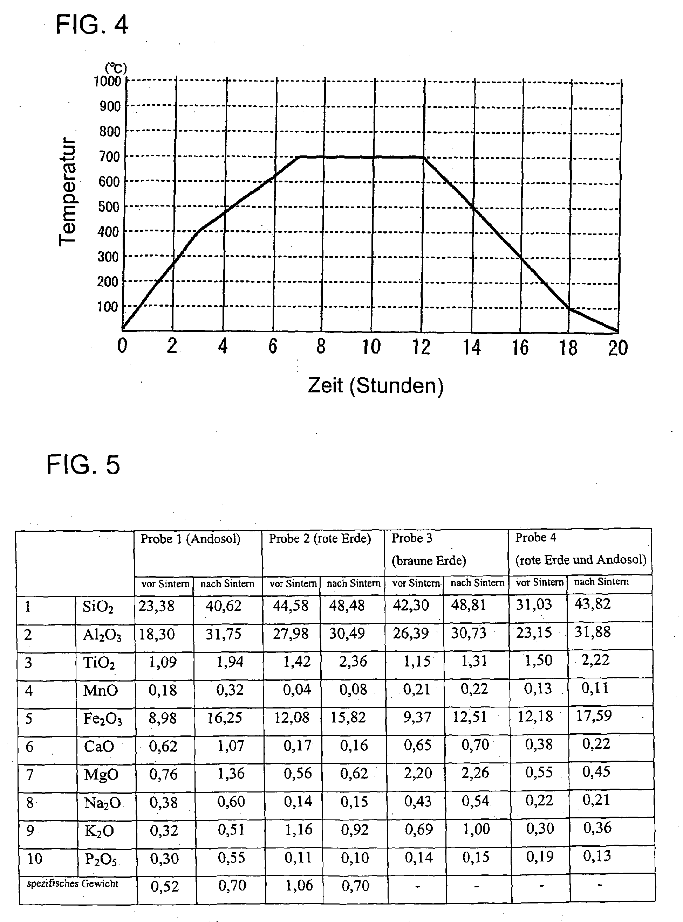

Anschließend wurden die Proben 1-4 jeweils in einen Behälter aus Keramik gefüllt und in einem elektrischen Töpferofen gesintert. Die Sintertemperatur (Temperatur im Ofen) und die Dauer sind in der Abb. 4 grafisch dargestellt. Konkret herrschte im Ofen am Anfang Zimmertemperatur (10 °C); dann wurde die Temperatur drei Stunden lang um etwa 130 °C pro Stunde erhöht, so dass sie drei Stunden nach Sinterbeginn 400 °C erreichte.

Nach Erreichen der 400 °C wurde die Temperatur vier Stunden lang weiter um etwa 75 °C pro Stunde erhöht, so dass sie sieben Stunden nach Sinterbeginn 700 °C erreichte. Ab diesem Zeitpunkt wurde die Temperatur im Ofen 5 Stunden lang auf 700 °C gehalten. 12 Stunden nach Sinterbeginn schaltete man schließlich den Ofenstrom aus. Die Ofentemperatur sank danach um etwa 100 °C pro Stunde und erreichte 18 Stunden nach Sinterbeginn genau 100 °C; 20 Stunden nach Sinterbeginn lag sie unter 40 °C.

Die Erdproben (Reinigungsmaterialien) waren nach beendetem Sintern noch feiner gekörnt als zuvor.

Fig. 5 zeigt die Zusammensetzung aller Proben vor und nach dem Sintern. Wie man aus der Tabelle ersehen kann, nahm der Eisenoxid-Anteil in jeder Probe stark zu. Da Eisenoxid zu den wichtigsten Substanzen gehört, die Schadstoffe wie Schwefelwasserstoff effektiv adsorbieren, kann davon ausgegangen werden, dass gesinterte Erden eine höhere Reinigungsleistung erbringen bzw. effektiver sind als ungesinterte Erden.

Bei diesem praktischen Beispiel wurde ein elektrischer Töpferofen zum Sintern verwendet, aber man kann auch einen Ofen zur Holzkohleherstellung anwenden.

Anschließend wurden Experimente zur Reinigung vom Schwefelwasserstoffgas durchgeführt, und zwar mit dem aus Probe 1 (Andosol), Probe 2 (rote Erde) sowie Probe 4 (Andosol und rote Erde) gewonnenen Reinigungsmaterial. Dafür wurden drei Reinigungsvorrichtungen 1 wie in Fig. 1 an einer Stelle platziert, an der Schwefelwasserstoffgas aus der Erde austritt. In die ersten Behandlungsbecken 3 sowie die zweiten Behandlungsbecken 4 aller drei Vorrichtungen 1 wurden jeweils 7 kg (10 Liter) Reinigungsmittel gefüllt. Die Pumpe 5 lief dann 36 Tage lang kontinuierlich; sie wurde so eingestellt, dass pro Minute ein halber Liter Gas durch die Reinigungsvorrichtung 1 strömte.

Die Konzentration des Schwefelwasserstoffs im Gas wurde während der 36 Tage, an denen die Pumpe 5 lief, insgesamt 24 Mal gemessen. Zwischen den Messungen lagen jeweils mindestens 24 Stunden. Bei jeder Messung wurden an drei Stellen der Reinigungsvorrichtung 1 (aus dem Gasaufnahmerohr 2, aus dem Gasauslass 3c des ersten Behandlungsbeckens 3 sowie aus dem Gasauslass 4c des zweiten Behandlungsbeckens 4) Proben entnommen, deren Schwefelwasserstoffgehalt dann gemessen wurde. Am Gasauslass 2c des Gasaufnahmerohrs 2, am Gasauslass 3c des ersten Behandlungsbeckens 3 sowie am Gasauslass 4c des zweiten Behandlungsbeckens 4 gibt es jeweils eine in Fig. 1 nicht dargestellte Öffnung, durch die man Gasproben entnehmen kann.

Laut Messung betrug die Schwefelwasserstoffkonzentration im Gas, das in das Gasaufnahmerohr 2 eintrat, durchschnittlich 200 ppm. Die Konzentration im Gas am Gasauslass 3c des ersten Behandlungsbeckens 3 (d. h. nach der ersten Reinigungsstufe) war in jeder der drei Reinigungsvorrichtungen 1 verschwindend gering.

Konkreter: Beim Reinigungsmaterial aus der Probe 1 (Andosol) betrug der Messwert bei 19 von 24 Messungen 0 ppm. Nur einmal wurde 0,2 ppm Schwefelwasserstoff gemessen, bei den restlichen vier Messungen lag der Wert bei jeweils 0,1 ppm (Durchschnitt: 0,025 ppm).

Beim Reinigungsmaterial aus der Probe 2 (rote Erde) betrug der Messwert bei 21 von 24 Messungen 0 ppm. Bei den restlichen drei Messungen lag der Wert bei jeweils 0,1 ppm (Durchschnitt: 0,0125 ppm).

Beim Reinigungsmaterial aus der Probe 4 (Andosol, rote Erde) betrug der Messwert bei 22 von 24 Messungen 0 ppm. Bei den restlichen zwei Messungen lag der Wert bei jeweils 0,1 ppm (Durchschnitt: 0,0083 ppm).

Die Schwefelwasserstoffkonzentration am Gasauslass 4c des zweiten Behandlungsbeckens 4 (d. h. nach der zweiten Behandlungsstufe) betrug bei allen Messungen an allen Vorrichtungen 1, also mit allen drei Materialien, 0 ppm.

Diese Experimente haben gezeigt, dass das Reinigungsmaterial, das durch Sintern bei 700 °C aus Naturerde gewonnen wird, sehr effektiv Schwefelwasserstoffgas reinigen kann, bzw. den Schwefelwasserstoff aus dem Gas adsorbieren kann. Diese Reinigungsleistung ließ auch nach einem Dauereinsatz von 36 Tagen kaum nach. Damit wurde bestätigt, dass das Reinigungsmaterial äußerst langlebig ist. Bei der Untersuchung der Reinigungsmaterialien nach dem Ende des Experiments konnte keine Veränderung festgestellt werden. Demnach lässt sich annehmen, dass sie ihre Reinigungsleistung mindestens 3-4 Monate halten können.

Das Reinigungsmaterial muss nicht unbedingt wie oben geschildert gesintert werden. Der Wassergehalt lässt sich auch durch Trocknen in der Sonne oder durch Warmluft unter 10 % senken. Auch Reinigungsmaterialien, die so hergestellt werden, erbringen eine höhere Reinigungsleistung und halten sich länger als nach herkömmlichen Verfahren hergestellte Reinigüngsmaterialien aus unbehandelter Naturerde. Da gesinterte Materialien jedoch eine etwas höhere Leistung erbringen, empfiehlt es sich, sie nach Möglichkeit durch Sintern herzustellen.

Die Sintertemperatur sollte bei 500-800 °C liegen. 700 °C, wie im oben genannten Beispiel, sind ideal.

Sintert man bei einer Temperatur von über 800 °C, verändert sich die Zusammensetzung der Erde. Außerdem zieht sich die Erde dann stark zusammen, und die damit einhergehende Verkleinerung der Poren kann die Adsorptionsleistung senken. Sintert man bei unter 500 °C, erhält man ein inhomogenes Produkt. Die Partikel der so hergestellten Reinigungsmaterialien sind nicht gleich groß und enthalten unterschiedlich viel Restwasser. Das Gas, das die Behandlungsbecken durchfließen soll, könnte dann das Material ungleichmäßig durchdringen oder mit einer schwankenden Rate hindurchströmen. Das Schwefelwasserstoffgas würde dann nicht effektiv genug adsorbiert, oder die Lebensdauer des adsorbierenden Reinigungsmaterials würde sich verkürzen.

Sintert man bei 700 °C, wie im oben beschriebenen Beispiel, wird die Partikelgröße homogener, und der Wassergehalt sinkt auf 0 %. So erzielt man einen gleichmäßigen Trocknungsgrad und ausreichend große Poren.

Sinkt die Effektivität des Reinigungsmaterials nach längerem Einsatz, so kann die Reinigungsleistung durch eine regenerierende Behandlung wieder gesteigert werden. Diese Regeneration lässt sich z. B. folgendermaßen durchführen:

Man holt das Reinigungsmaterial aus den Behandlungsbecken heraus, füllt es in einen verschlossenen Behälter und bringt es in einen mit einer Lüftung versehenen, verschlossenen Raum. Das Reinigungsmaterial wird dort auf einem Tisch oder dem Boden ausgebreitet und dann durch Anblasen mit 70-80 °C warmer Luft getrocknet. Da dabei Schwefelwasserstoffgas aus dem gebrauchten Reinigungsmaterial entweichen kann, wird die Abluft dieser Regenerieranlage idealerweise durch einen Filter gereinigt, der mit unverbrauchtem Reinigungsmaterial gefüllt ist, bevor sie aus dem Raum geführt wird.

Nach zweitägiger Warmlufttrocknung wird das Material, wie bei seiner Herstellung, in einem elektrischen Ofen oder dergleichen erneut gesintert. Durch diese Regenerierungsbehandlung lässt sich das Reinigungsmaterial der vorliegenden Erfindung wiederholt verwenden.

Das vorliegende Reinigungsmaterial hat, anders als die herkömmlichen Materialien, auch in kleiner Menge einen großen Effekt. Beispielsweise hat man das erste Behandlungsbecken 3 der Reinigungsvorrichtung 1 aus Fig. 1 mit 25 kg (26,5 Litern) unbehandelter Naturerde gefüllt und pro Minute 0,5 Liter Schwefelwasserstoffgas (Konzentration: 200 ppm) hindurchströmen lassen. Bei diesem Reinigungsexperiment enthielt das aus dem ersten Behandlungsbecken 3 ausgeschiedene Gas im Durchschnitt noch mehr als 60 ppm Schwefelwasserstoff. Dagegen enthielt das Gas nach Anwendung von nur 7 kg (10 Litern) des bei 700 °C gesinterten Reinigungsmaterials 0 ppm Schwefelwasserstoff.

### Industrielle Anwendbarkeit

Wie oben erklärt, können in toxischen Gasen, verunreinigter Erde und verunreinigtem Wasser enthaltene Schadstoffe und übel riechende Bestandteile durch das Reinigungsverfahren der vorliegenden Erfindung mit hoher Effektivität adsorbiert, unschädlich gemacht und zurückgehalten werden. Außerdem können die Adsorption der Schadstoffe und die Reinigungsleistung ziemlich lange aufrecht erhalten werden.

Da das Reinigungsmaterial der vorliegenden Erfindung regenerierbar und wiederverwendbar ist, ist es auch unter den Gesichtspunkten der Umweltfreundlichkeit, der Ressourcenschonung und der Wirtschaftlichkeit sehr zu empfehlen.

## Patentansprüche

1. Verfahren zur Reinigung toxischer Gase, verunreinigter Erde sowie verunreinigten Wassers, **dadurch gekennzeichnet, dass** als Hauptausgangsmaterial natürliche Erde verwendet wird, aus der ein Reinigungsmaterial hergestellt wird, indem man sie trocknet, bis ihr Wassergehalt unter 10 % liegt; toxisches Gas, verunreinigte Erde oder verunreinigtes Wasser mit diesem Reinigungsmaterial in Kontakt gebracht wird, und die Schadstoffe daran adsorbiert werden.

2. Verfahren zur Reinigung toxischer Gase, verunreinigter Erde sowie verunreinigten Wassers gemäß Anspruch 1, **dadurch gekennzeichnet, dass** als Ausgangssubstanz für das oben beschriebene Reinigungsmaterial natürliche Erde dient, deren Wassergehalt durch Sintern unter 10 % gesenkt wird.

3. Verfahren zur Reinigung toxischer Gase, verunreinigter Erde sowie verunreinigten Wassers gemäß Anspruch 2, **dadurch gekennzeichnet, dass** die Ausgangssubstanz für das oben beschriebene Reinigungsmaterial durch Sintern bei einer Temperatur von 500-800 °C hergestellt wird.

4. Vorrichtung zur Reinigung toxischer Gase, in der das zu reinigende toxische Gas in mit einem Reinigungsmaterial gefüllte Behandlungsbecken eingeleitet und in diesen Becken mit dem Reinigungsmaterial in Kontakt gebracht wird, an dem die Schadstoffe adsorbiert werden;
wobei diese Vorrichtung eine Komponente aufweist, mit der dem toxischen Gas Wasser entzogen wird, bevor es in die Behandlungsbecken gelangt;
wobei diese Vorrichtung eine weitere Komponente unterhalb der oben genannten Becken aufweist, mit der Wasser aus dem Becken abgeleitet wird;
wobei der Wassergehalt des besagten Reinigungsmaterials, dessen Hauptausgangsmaterial aus natürlicher Erde gewonnen ist, durch Trocknen unter 10 % eingestellt ist.

5. Vorrichtung zur Reinigung toxischer Gase gemäß Anspruch 4, **dadurch gekennzeichnet, dass** der Wassergehalt der Ausgangssubstanz für das besagte Reinigungsmaterial durch Sintern unter 10 % eingestellt ist.

6. Vorrichtung zur Reinigung toxischer Gase gemäß Anspruch 5, **dadurch gekennzeichnet, dass** die Ausgangssubstanz für das besagte Reinigungsmaterial durch Sintern bei einer Temperatur von 500-800 °C hergestellt ist.

7. Vorrichtung zur Reinigung verunreinigten Wassers, in der das verunreinigte Wasser in mit einem Reinigungsmaterial gefüllte Behandlungsbecken eingeleitet und in diesen Becken mit dem Reinigungsmaterial in Kontakt gebracht wird, an dem die Schadstoffe adsorbiert werden;
wobei der Wassergehalt des besagten Reinigungsmaterials, dessen Hauptausgangsmaterial aus natürlicher Erde gewonnen ist, durch Trocknen unter 10 % eingestellt ist.

8. Vorrichtung zur Reinigung verunreinigten Wassers gemäß Anspruch 7, **dadurch gekennzeichnet dass** der Wassergehalt des oben genannten Reinigungsmaterials durch Sintern der Ausgangssubstanz unter 10 % eingestellt ist.

9. Vorrichtung zur Reinigung verunreinigten Wassers gemäß Anspruch 8, **dadurch gekennzeichnet, dass** die Ausgangssubstanz für das oben beschriebene Reinigungsmaterial durch Sintern bei einer Temperatur von 500-800 °C hergestellt ist.

10. Reinigungsmittel, **gekennzeichnet durch** eine **durch** ein Sieb homogenisierte Korngröße von natürlicher Erde, deren Wassergehalt **durch** Trocknen unter 10 % eingestellt ist.

11. Reinigungsmittel gemäß Anspruch 10, **dadurch gekennzeichnet, dass** das besagte Sieb eine Maschenweite von unter 2 mm aufweist.

12. Reinigungsmittel gemäß Anspruch 10 oder 11, **dadurch gekennzeichnet, dass** der Wassergehalt der pulverigen und gekörnten natürlichen Erde durch Trocknen unter 10 % eingestellt ist.

13. Reinigungsmittel gemäß Anspruch 12, **dadurch gekennzeichnet, dass** es durch Sintern bei einer Temperatur von 500-800 °C hergestellt ist.
